**Europäisches Patentamt**

**European Patent Office**

**Office européen des brevets**

(11) Publication number: **0 146 631**
**B1**

# EUROPEAN PATENT SPECIFICATION

(45) Date of publication of patent specification: **27.12.89**

(51) Int. Cl.⁴: **G 05 B 19/405**

(21) Application number: **84902075.5**

(22) Date of filing: **31.05.84**

(86) International application number:
**PCT/JP84/00277**

(87) International publication number:
**WO 84/04827 06.12.84 Gazette 84/28**

(54) **DATA INPUT SYSTEM FOR NUMERICALLY-CONTROLLED APPARATUS.**

(30) Priority: **01.06.83 JP 97504/83**

(43) Date of publication of application:
**03.07.85 Bulletin 85/27**

(45) Publication of the grant of the patent:
**27.12.89 Bulletin 89/52**

(84) Designated Contracting States:
**DE FR GB**

(56) References cited:
**EP-A-0 039 233**
**GB-A-2 054 909**
**JP-A-57 169 813**

(73) Proprietor: **FANUC LTD**
**3580, Shibokusa Aza-Komanba Oshino-mura**
**Minamitsuru-gun Yamanashi 401-05 (JP)**

(72) Inventor: **MIYATA, Mitsuto**
**1768-149, Yugi**
**Hachioji-shi Tokyo 192 (JP)**
Inventor: **NAGAOKA, Yukihito**
**103, Shinmei-kopo**
**1-18-2, Shinmei Hino-shi Tokyo 191 (JP)**

(74) Representative: **Billington, Lawrence Emlyn**
**et al**
**HASELTINE LAKE & CO Hazlitt House 28**
**Southampton Buildings Chancery Lane**
**London WC2A 1AT (GB)**

Courier Press, Leamington Spa, England.

## Description

The present invention relates to a data input system for NC (Numerical Control) equipment, and more particularly to a data input system for numerical control equipment which is provided with a means for displaying comments on a keying procedure or the like on a display of the equipment for improvement of its operability.

In general, numerically controlled equipment is operated through a manual data input device (a sort of keyboard) provided on the front panel of the equipment, and the operating procedure is usually described in detail in an instruction manual. With recent enhancement of functions of the numerical control equipment, however, the keying procedure is now becoming more and more complex and diverse, and a single reading of the manual is not enough for correct keying operations. Especially in the case of a key entry system arranged so that an input from the keyboard is first stored in a key-input buffer area and an operation corresponding to the key input is initiated by pressing of a command execution key, otherwise known as a key-input execute key, the operator cannot conduct correct operations without prior knowledge of key input data for initiating an operation corresponding to each command execution key. With the spread of numerical control equipment into various fields, it is strongly desirable to make it possible for even an unskilled person to operate the equipment.

An example of a data input system for NC machines is to be found in GB 2,054,909. This apparatus presents the user with a series of questions to be answered, which eases operation for the unskilled operator but would slow down a skilled operator.

Embodiments of the present invention may provide an apparatus which displays, on a display of the numerical control equipment, information on key input data necessary for initiating an operation corresponding to the command execution key, permitting even a person unfamiliar with keying operations relatively easily, without hindering use by a skilled operator.

According to the invention there is provided a data input device for numerical control equipment, comprising: key input means including keys for entering information and keys for executing commands; comment storage means for storing information on key input data necessary for initiating an operation corresponding to each command-execution key; comment display means for reading out of the comment storage means comments corresponding to the command chosen and displaying them on a display; and data input processing means for executing a process corresponding to the command chosen; characterised in that the device also comprises an input buffer means for storing data entered from the key input means; and the comment display means is activated in the case where the command is entered when no data is stored in the input buffer means, whereas the processing means is activated in the case where the command is entered when data is stored in the input buffer means.

An embodiment of the invention will now be described with reference to the according drawings in which:

Fig. 1 is a diagram explanatory of the constitution of the present invention;

Fig. 2 is a block diagram illustrating the principal part of an example of the hardware arrangement of NC equipment provided with data input device embodying the present invention;

Fig. 3 is a plan view showing an example of each of a display part and a keyboard part of the NC equipment depicted in Fig. 2; and

Fig. 4 is a flowchart showing an example of the software arrangement of the data input device of the present invention.

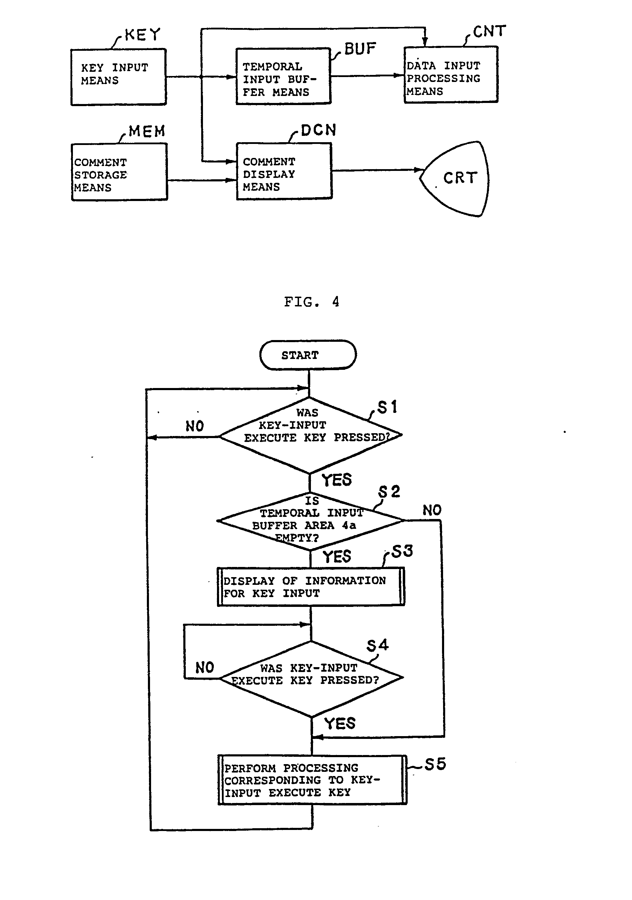

Fig. 1 shows an embodiment of the present invention. Numeric, alphabetic or like data entered from key input means KEY is stored in temporal input buffer means BUF. Comment storage means MEM has stored therein information on key input data necessary for initiating an operation corresponding to each key-input execute command. Comment display means DCN reads out of the comment storage means MEM comments corresponding to the key input execute command and displays them on a display CRT in the case where the command is entered from the key input means KEY when no data is stored in the temporal input buffer means BUF. Data input processing means CNT executes processing corresponding to the key input execute command in the case where the command is entered from the key input means KEY when data is stored in the temporal input buffer means BUF.

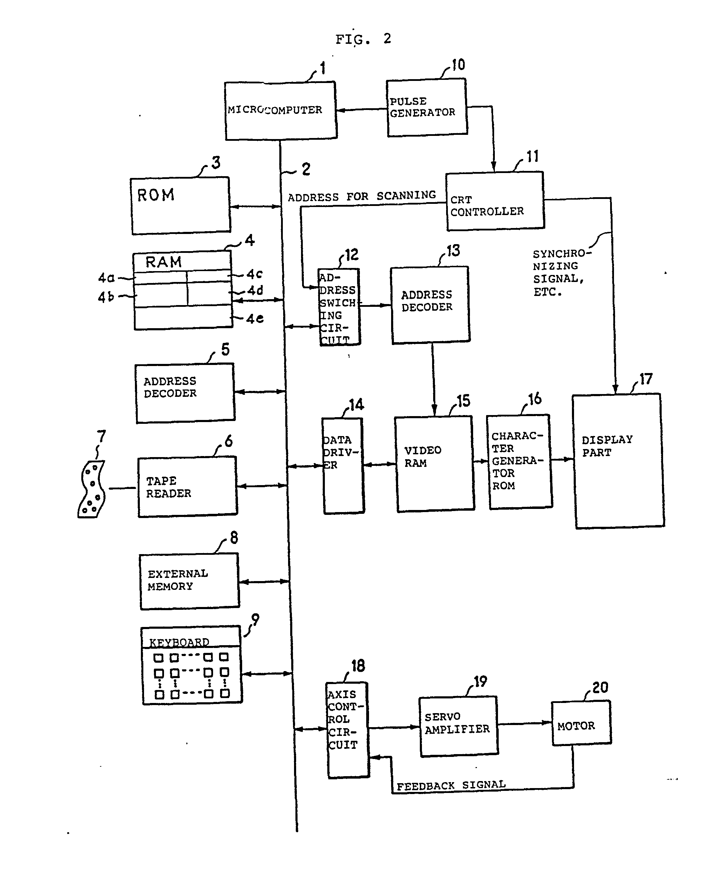

Fig. 2 is a block diagram illustrating the principal part of an example of the hardware arrangement of NC equipment provided with a data input device embodying the present invention. Reference numeral 1 indicates a microcomputer, 2 its bus, 3 a ROM which has stored therein programs necessary for making the microcomputer 1 perform predetermined operations and comments described later, 4 a RAM having storage areas such as a temporal input buffer area 4a, a work buffer area 4b, a running information storage area 4c, a parameter setting area 4d and a tool compensation setting area 4e, 5 and address decoder, 6 a tape reader, 7 a command tape, 8 an external memory such as a magnetic bubble memory or the like, 9 a keyboard having various keys, 10 a pulse generator, 11 a CRT controller, 12 an address switching circuit, 13 and address decoder, 14 a data driver, 15 a video RAM, 16 a character generator ROM, 17 a display part such as a CRT, 19 an axis control circuit, 19 a servo amplifier and 20 a motor. An NC command program, when given in the form of a command tape, is read by the microcomputer 1 via the tape reader 6 and when given in the form of being stored in the external memory 8, it is read directly by the microcomputer. The command program thus read is interpreted, producing running information. For ordinary NC running, the axis control circuit 18 is controlled in accordance with the running information, controlling the rotation of the motor 20 by the servo amplifier 19.

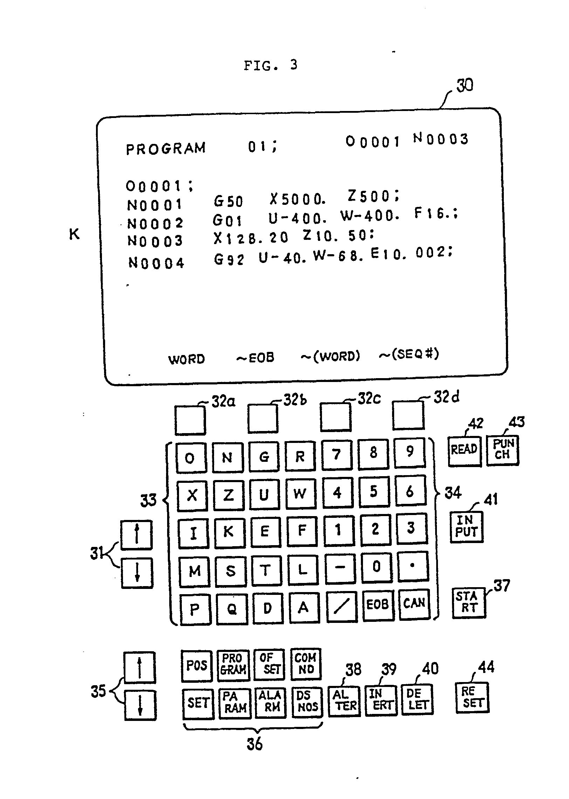

Fig. 3 is a plan view illustrating, by way of example, a display part and a keyboard part of the NC equipment shown in Fig. 2. Reference nummeral 30 indicates a CRT screen, 31 cursor move keys for moving a cursor K displayed on the CRT screen, 32a to 32d so-called soft keys which can be used for various purposes according to software, 33 address keys for inputting an address of a sequence number or functional word, for example, G00, 34 data keys for inputting numeric data, 35 paging keys for performing paging of the CRT screen, 36 function keys for calling a required screen, 37 a start key, 38 a key-input execute key for changing a program, 39 a key-input execute key for inserting a program, 40 a key-input execute key for deleting a program, 41 a key-input execute key for setting a parameter or the like, 42 a read key, 43 a punch key and 44 a reset key.

Fig. 4 is an example of a flowchart showing, by way of example, the software arrangement of the data input device of the present invention. A description will be given, with reference to the drawings, of the operation of this embodiment. Incidentally, while this embodiment will hereinafter be described in connection with a program deleting process, the present invention is not limited specifically thereto but is applicable to various processes such as alteration and insertion of a program, punching of a program on a paper tape, setting of a parameter and so forth.

For example, in the case of deleting a part of the NC commmand program stored in the external memory 8, a first step is to operate the function keys 36 by which the NC command program desired to erase is called up onto the CRT screen 30 in a known manner, as shown in Fig. 3. Then the cursor move keys 31 are operated to move the cursor K to the beginning of the contents desired to erase. In the example shown in Fig. 3, the cursor K is positioned at the beginning of a sequence number N0003. The next step is to specify the part desired to delete. Since there exist various modes of deletion, it is necessary to enter data suitable to a particular one of them. In this case, a person well acquainted with the method of operation needs only to follow the same method as in the past. That is, in the event that it is desired to delete only the sequence number N0003, when the address keys 33 and the data keys 34 are operated to enter the sequence number N0003, the microcomputer 1 reads it and stores it in the temporal input buffer area 4a of the RAM 4, after which upon pressing the command execution key 40, the microcommputer 1 detects the pressing of the key and the storage of data in the temporal input buffer area 4a (S1, S2), performing the process corresponding to the execute key 40 (S5), as shown in Fig. 4. That is, the microcomputer 1 interprets the contents stored in the temporal input buffer area 4a and deletes only the sequence number N0003 by known means. When it is desired to delete the contents of the block from the sequence number N0003 to the end-of-block symbol ";", the entire block of the sequence number N0003 is erased by pressing the execute key 40 after keying EOB. Further, when it is desired to erase the contents from the sequence number N0003 to a certain word, for example, G92, or to a block of a certain sequence number, for instance, N0004, the eontents desired to delete are erased by pressing the key 40 after keying G92 and N0004, respectively.

A person who has no knowledge of such methods of operation or wants previous verification of them needs only to press the execute key 40 without entering any data. If data has been stored in the temporal input buffer area 4a of the RAM 4 at the point of time when the command execution key 40 was pressed, as shown in Fig. 4, the microcomputer 1 reads out of the ROM 3 comments on the operation corresponding to the key concerned, in this case a program erase mode, and displays the contents of the comments at the lower portion of the CRT screen 30 (S3), as depicted in Fig. 3. In this example, WORD, ∾EOB, ∾(WORD) and ∾(SEQ#) are displayed. Here, WORD is a comment to the effect that when it is desired to erase only one word indicated by the cursor K, the word it is desired to erase should be keyed; ∾EOB is a comment to the effect that when it is desired to delete the contents from the word indicated by the cursor to the end of the block ";", EOB should be keyed; ∾(WORD) is a comment to the effect that when it is desired to delete the contents from the word indicated by the cursor to a certain word, the certain word should be keyed; and ∾(SEQ#) is a comment to the effect that when it is desired to delete the contents from the word indicated by the cursor to a block of a certain sequence number (N), the sequence number of the block should be keyed. Accordingly, the operator can learn the next operation to some extent from the displays thus provided. Then, when the operator presses the execute key 40 after keying data similar to that mentioned previously, the same processing as in the past is earried out, deleting the specified portion of the NC command program (S4, S5). That is, according to conventional key input devices, in the case where the execute key is pressed when no data is stored in the temporal input buffer area 4a, no processing is performed, but according to the present invention, information for keying operations is displayed on the CRT screen.

Incidentally, in this embodiment, comments are displayed at the lower portion of the CRT screen corresponding to the soft keys 32a to 32d. Further, this embodiment is arranged so that when the soft keys are pressed with no data stored in the temporal input buffer area 4a, a more detailed operating procedure or comments are displayed on the CRT screen 30. For instance, when the soft key 32c corresponding to ∾(WORD) is pressed, a message such as "KEY IN WORD" or the like is displayed. Such a message is also prestored in the ROM 3.

While the present invention has been described as being applied to a system in which the command execution keys are individually provided by hardware, the invention is also applicable, of course, to such equipment where the command execution keys are formed by software. That is, the present invention can also be applied to NC equipment designed so that names of a plurality of "key-input execute keys" particular to each picture are displayed at the lower part of the CRT screen 30 and a set of soft keys can be used in common to respective pictures.

As has been described above, according to the present invention, since information on key input data necessary for initiating an operation corresponding to a command execution key is displayed on a display of the numerical control equipment, even a person who is unfamiliar with key operations can correctly operate keys relatively easily. Moreover, since the equipment can also be used in the conventional manner by pressing an execute key immediately after entering necessary data into the temporal input buffer means, there is no possibility of impairing the operability of equipment for those who are well acquainted with the key operations.

## Claims

1. A data input device for numerical control equipment, comprising: key input means including keys for entering information and keys for executing commands; comment storage means for storing information on key input data necessary for initiating an operation corresponding to each command-execution key; comment display means for reading out of the comment storage means comments corresponding to the command chosen and displaying them on a display; and data input processing means for executing a process corresponding to the command chosen; characterised in that the device also comprises an input buffer means for storing data entered from the key input means; and the comment display means is activated in the case where the command is entered when no data is stored in the input buffer means, whereas the processing means is activated in the case where the command is entered when data is stored in the input buffer means.

2. A data input device according to claim 1, wherein the functions of the command execution keys are provided by software and displayed on the display means.

## Patentansprüche

1. Dateneingabe-Gerät für eine numerische Steuereinrichtung, mit einer Eingabetastatur, die Tasten zum Eingeben von Information und Tasten zum Ausführen von Befehlen enthält, einem Bemerkungsspeichermittel zum Speichern von Information bezogen auf Tasteneingabedaten, die zum Initiieren einer Operation erforderlich sind, die jeweils einer Befehlsausführungs-Taste entspricht, einem Bemerkungsanzeigemittel zum Auslesen von Bemerkungen aus dem Bemerkungsspeichermittel, die dem Befehl entsprechen, der ausgewählt ist, und zum Anzeigen derselben auf einer Anzeigefläche, und einem Dateneingabe-Verarbeitungsmittel zum Ausführen eines Prozesses, der dem ausgewählten Befehl entspricht, dadurch gekennzeichnet, daß das Gerät außerdem ein Eingabepuffermittel zum Speichern von Daten umfaßt, die von der Eingabetastatur eingegeben sind, und das Bemerkungsanzeigemittel in dem Fall aktiviert wird, in dem der Befehl eingegeben wird, wenn keine Daten in dem Eingabepuffermittel gespeichert sind, wohingegen das Verarbeitungsmittel in dem Fall aktiviert wird, in dem der Befehl eingegeben wird, wenn Daten in dem Eingabepuffermittel gespeichert sind.

2. Dateneingabe-Gerät nach Anspruch 1, bei dem die Funktionen der Befehlsausführungs-Tasten durch Software vorgesehen sind und auf der Anzeigefläche des Anzeigemittels angezeigt werden.

## Revendications

1. Un dispositif d'entrée de données pour un équipement de commande numérique, comprenant: des moyens d'entrée à touches comprenant des touches pour l'introduction d'information et des touches pour l'exécution d'ordres; des moyens d'enregistrement de commentaires destinés à enregistrer une information concernant des données à introduire par les touches, qui sont nécessaires au déclenchement d'une opération correspondant à chaque touche d'exécution d'ordre; des moyens de présentation de commentaires destinés à lire dans les moyens d'enregistrement de commentaires, des commentaires qui correspondent à l'ordre choisi, et à les présenter sur un dispositif de visualisation; et des moyens de traitement d'entrée de données destinés à exécuter un traitement qui correspond à l'ordre choisi; caractérisé en ce que le dispositif comprend également des moyens tampons d'entrée qui sont destinés à enregistrer des données introduites par les moyens d'entrée à touches; et les moyens de présentation de commentaires sont activés dans le cas où l'ordre est introduit alors qu'il n'y a pas de données enregistrées dans les moyens tampons d'entrée, tandis que les moyens de traitement sont activés dans le cas où l'ordre est introduit lorsque des données sont enregistrées dans les moyens tampons d'entrée.

2. Un dispositif d'entrée de données selon la revendication 1, dans lequel les fonctions des touches d'exécution d'ordre sont réalisées par logiciel et sont présentées sur les moyens de visualisation.

```
        KEY                              BUF            CNT
 ┌──────────────┐      ┌──────────────┐      ┌──────────────┐
 │ KEY INPUT    │─────▶│ TEMPORAL     │─────▶│ DATA INPUT   │
 │ MEANS        │      │ INPUT BUF-   │      │ PROCESSING   │
 │              │      │ FER MEANS    │      │ MEANS        │
 └──────────────┘      └──────────────┘      └──────────────┘

        MEM                  DCN
 ┌──────────────┐      ┌──────────────┐          ┌──────┐
 │ COMMENT      │─────▶│ COMMENT      │─────────▶│ CRT  │
 │ STORAGE      │      │ DISPLAY      │          │      │
 │ MEANS        │      │ MEANS        │          └──────┘
 └──────────────┘      └──────────────┘
```

FIG. 4

```
                    ┌──────────┐
                    │  START   │
                    └──────────┘
                         │
          ┌──────────────┤
          │              ▼
          │          ╱ WAS ╲         S1
   NO     │        ╱ KEY-INPUT ╲
 ◀────────┤        ╲ EXECUTE KEY ╱
          │          ╲ PRESSED? ╱
          │              │ YES
          │              ▼
          │          ╱   IS    ╲      S2      NO
          │        ╱ TEMPORAL INPUT ╲ ───────────┐
          │        ╲ BUFFER AREA 4a ╱            │
          │          ╲  EMPTY?  ╱                │
          │              │ YES    S3             │
          │       ┌──────────────────┐           │
          │       │ DISPLAY OF INFORMATION │     │
          │       │ FOR KEY INPUT    │           │
          │       └──────────────────┘           │
          │              │                        │
          │        ┌─────┤                        │
          │   NO   │     ▼                        │
          │ ◀──────┤  ╱ WAS KEY-INPUT ╲  S4       │
          │        ╲ EXECUTE KEY PRESSED? ╱       │
          │          ╲          ╱                 │
          │              │ YES                     │
          │              ▼◀───────────────────────┘
          │       ┌──────────────────┐
          │       │ PERFORM PROCESSING │    S5
          │       │ CORRESPONDING TO KEY- │
          │       │ INPUT EXECUTE KEY │
          │       └──────────────────┘
          │              │
          └──────────────┘
```

1

FIG. 2

FIG. 3

30

```
PROGRAM      01;        O 0001  N0003

O0001;
N0001    G50   X5000.   Z500;
N0002    G01   U-400.  W-400.  F16.;
N0003    X128.20  Z10.50;
N0004    G92  U-40. W-68. E10.002;




    WORD    ~EOB    ~(WORD)  ~(SEQ #)
```

K

32a  32b  32c  32d

33 {
| O | N | G | R | 7 | 8 | 9 |
| X | Z | U | W | 4 | 5 | 6 |
| I | K | E | F | 1 | 2 | 3 |
| M | S | T | L | — | 0 | · |
| P | Q | D | A | / | EOB | CAN |
} 34

31 { ↑ ↓ }

42 READ   43 PUN CH

41 IN PUT

37 STA RT

35 { ↑ ↓ }

| POS | PRO GRAM | OF SET | COM ND |
| SET | PA RAM | ALA RM | DS NOS |

38 AL TER   39 IN ERT   40 DE LET   44 RE SET

36